# EUROPÄISCHE PATENTANMELDUNG

(11) **EP 3 533 327 A1**
(43) Veröffentlichungstag der Anmeldung: **04.09.2019**
(21) Anmeldenummer: 19155246.2
(22) Anmeldetag: 04.02.2019
(51) Int. Cl.: A01M 7/00, A01B 69/00, A01G 23/00, A01C 23/00, A01C 21/00

(54) **SYSTEM ZUR ÜBERWACHUNG EINES ARBEITSGERÄTES MITHILFE VON MANUELL DEFINIERBAREN GRENZEN VON NUTZFLÄCHEN**

(30) Priorität: 02.03.2018 DE 102018203123
(71) Anmelder: Robert Bosch GmbH, 70442 Stuttgart (DE)
(72) Erfinder: Ochner, Benjamin, 70178 Stuttgart (DE)

(57) **Zusammenfassung**

Die Erfindung betrifft ein System (1) zur Überwachung eines mobilen Arbeitsgerätes (2), wobei das System (1) zumindest das mobile Arbeitsgerät (2) mit einem Sender (3) zum Senden einer Standortinformation des Arbeitsgerätes (2), einen Empfänger (4) zum Empfangen der Standortinformation und eine Auswertungseinheit (5) aufweist, die anhand der Standortinformation eine aktuelle Position des Arbeitsgerätes (2) bestimmt, wobei das System (1) eine Eingabeschnittstelle (6) für einen Benutzer des Systems (1) hat und mithilfe der Eingabeschnittstelle (6) Grenzen (7) eines ersten geografischen Bereiches (8) und Grenzen (9) eines zweiten vom ersten verschiedenen geografischen Bereiches (10) bestimmbar sind und zu zumindest einem der beiden Bereiche (8, 10), dem ersten Bereich (8) und/oder dem zweiten Bereich (10), mithilfe der Eingabeschnittstelle (6) zumindest eine Aktion zuweisbar ist, die das System (1) ausführt, wenn die aktuelle Position in dem ersten Bereich (8) beziehungsweise in dem zweiten Bereich (10) liegt.

## Beschreibung

Die Erfindung betrifft ein System zur Überwachung eines Arbeitsgerätes, wobei das System zumindest ein Arbeitsgerät mit einem Sender zum Senden einer Standortinformation des Arbeitsgerätes, einen Empfänger zum Empfangen der Standortinformation und eine Auswertungseinheit aufweist, die anhand der Standortinformation eine aktuelle Position des Arbeitsgerätes bestimmt.

Ein derartiges System ist aus der WO 2016/087535 A1 bekannt. Das darin beschriebene System steuert vollautomatisch mehrere Landwirtschaftsmaschinen und zeichnet sich dadurch aus, dass es dynamisch die Bewegung einer oder mehrerer der Landwirtschaftsmaschinen neu plant. Mithilfe der Landwirtschaftsmaschinen zu bearbeitende Nutzflächen sind durch Geozäune, auch Geofences genannt, festgelegt.

Ausgehend hiervon ist es die Aufgabe der vorliegenden Erfindung, ein System der gattungsmäßigen Art dahingehend weiter zu verbessern, dass eine Verwendung eines oder mehrerer Arbeitsgeräte auf einer Nutzfläche flexibler gestaltet werden kann.

Diese Aufgabe wird mit einem System mit den Merkmalen des Anspruches 1 und einem Verfahren mit den Merkmalen des Anspruches 10 gelöst. Vorteilhafte Ausgestaltungen des Systems sind Gegenstand der abhängigen Ansprüche.

Zur Lösung der Aufgabe wird ein System zur Überwachung eines mobilen Arbeitsgerätes vorgeschlagen. Das System weist zumindest das mobile Arbeitsgerät mit einem Sender zum Senden einer Standortinformation des Arbeitsgerätes, einen Empfänger zum Empfangen der Standortinformation und eine Auswertungseinheit auf, die anhand der Standortinformation eine aktuelle Position des Arbeitsgerätes bestimmt.

Das vorgeschlagene System zeichnet sich dadurch aus, dass das System eine Eingabeschnittstelle für einen Benutzer des Systems hat und mithilfe der Eingabeschnittstelle Grenzen eines ersten geografischen Bereiches und Grenzen eines zweiten vom ersten verschiedenen geografischen Bereiches bestimmbar sind. Weiterhin ist zu zumindest einem der beiden Bereiche, dem ersten Bereich und/oder dem zweiten Bereich, mithilfe der Eingabeschnittstelle zumindest eine Aktion zuweisbar, die das System ausführt, wenn die aktuelle Position in dem ersten Bereich beziehungsweise in dem zweiten Bereich liegt.

Das mobile Arbeitsgerät kann beispielsweise eine Landwirtschaftsmaschine, ein Baustellenfahrzeug, ein Gerät zur Verwendung bei einer Lagerhaltung oder ein sonstiges Gerät zum Arbeiten sein. Mobil meint, dass das Arbeitsgerät beweglich ist, entweder mithilfe eines Benutzers, mithilfe einer zentralen Steuerung oder autonom. Die Standortinformation kann jegliche Information sein, die für ein Auffinden des Arbeitsgerätes verwendbar ist, wie zum Beispiel eine relative Entfernung des Arbeitsgerätes von dem Empfänger. Vorteilhaft ermittelt die Auswertungseinheit die relative Entfernung anhand einer Signalstärke der von dem Sender gesendeten und mit dem Empfänger empfangenen Standortinformation. Die aktuelle Position kann eine relative oder eine globale Position sein. Möglich ist auch, dass die aktuelle Position angibt, in welchem Bereich, dem ersten oder dem zweiten Bereich, sich das Arbeitsgerät befindet. Mit einem geografischen Bereich ist insbesondere eine Fläche gemeint. Im Sinne der Erfindung kann ein geografischer Bereich auch einen dreidimensionalen Raum umfassen. Zuweisbar meint, dass der Benutzer die Aktion dem ersten und/oder dem zweiten Bereich zuordnen kann, so dass eine Zuordnung erzeugbar ist, die der Aktion zumindest einen der beiden Bereiche zuordnet. Die Auswertungseinheit speichert vorzugsweise die Zuordnung.

Die Aktion kann vielfältig ausgestaltet sein. Im Sinne der Erfindung können mehrere Aktionen zu dem ersten und/oder zweiten Bereich zuweisbar sein. Im Folgenden werden die Aktion, die der Benutzer dem ersten Bereich zugeordnet als erste Aktion, und die Aktion, die der Benutzer dem zweiten Bereich zugeordnet als zweite Aktion, bezeichnet.

Gemäß einer ersten Variante der ersten oder zweiten Aktion kann die Auswerteeinheit ein Warnsignal erzeugen wenn die aktuelle Position des Arbeitsgerätes in dem ersten oder zweiten Bereich liegt. Nach einer zweiten Variante kann die erste oder zweite Aktion vorsehen, einen Prozess bereitzustellen, der eine Bewegung des Arbeitsgerätes aus dem entsprechenden ersten beziehungsweise zweiten Bereich steuert. Bevorzugt ist der Prozess mithilfe der Eingabeschnittstelle durch den Benutzer auslösbar. Möglich ist ebenfalls, dass das System den Prozess automatisch auslöst. In beiden Fällen ist es vorteilhaft, wenn das Arbeitsgerät sich autonom in dem ersten und/oder zweiten Bereich bewegen kann. In diesem Zusammenhang ist es vorteilhaft, wenn für die Bewegung aus dem entsprechenden Bereich heraus das System eine Information über einen Zielort an das Arbeitsgerät sendet, beispielsweise eine Nummer des Bereiches zu dem sich das Arbeitsgerät bewegen soll.

Mit der Eingabeschnittstelle für den Benutzer ist eine Eingabeschnittstelle gemeint, bei welcher vorgesehen ist, dass der Benutzer die Grenzen des ersten und zweiten geografischen Bereiches selbst bestimmen, d.h. jeweilige Positionen der Grenzen der entsprechenden Bereiche festlegen, kann und die Aktion selbst bestimmen kann.

Das vorgeschlagene System ermöglicht gegenüber einem vollautomatischen System gemäß dem Stand der Technik, dass das System durch den Benutzer veränderbar ist und leicht an neue Bedingungen angepasst werden kann. Eine Situation, bei der das System an neue Bedingungen angepasst werden muss, kann dann vorliegen, wenn sich durch eine Umrüstung eine Eigenschaft des Arbeitsgerätes ändert, wie beispielsweise eine maximale Geschwindigkeit oder ein Gewicht des Arbeitsgerätes. Hat das Arbeitsgerät nach der Umrüstung eine niedrigere maximale Geschwindigkeit, sodass es in einem bestimmten Bereich, beispielsweise dem zweiten Bereich, nicht mehr verwendet werden darf, so kann der Benutzer die zweite Aktion in Form eines Warnsignals zu dem zweiten Bereich zuweisen.

Möglich ist auch, dass aufgrund von äußeren Vorgaben, wie gesetzliche Bestimmungen, die Grenzen des ersten oder zweiten Bereiches geändert werden müssen. In diesem Fall kann der Benutzer die Grenzen mithilfe der Eingabeschnittstelle neu bestimmen. Ein vollautomatisches System müsste in den beiden letztgenannten Fällen neu programmiert werden.

Die Eingabeschnittstelle ist bevorzugt eine manuelle Schnittstelle oder eine Audioschnittstelle mit einem Mikrophon. Bevorzugt ist die Eingabeschnittstelle als ein mobiles Gerät, wie zum Beispiel ein Smartphone, ausgeführt und hat eine Tastatur oder einen berührungsempfindlichen Bildschirm.

In einer vorteilhaften Ausgestaltung ist vorgesehen, dass mithilfe der Eingabeschnittstelle zu dem ersten Bereich eine in dem ersten Bereich erste erlaubte Aktion und/oder zu dem zweiten Bereich eine in dem zweiten Bereich zweite erlaubte Aktion zuweisbar ist. Die erste erlaubte Aktion darf mit dem Arbeitsgerät in dem ersten Bereich und die zweite erlaubte Aktion mit dem Arbeitsgerät in dem zweiten Bereich durchgeführt werden. Dadurch kann das System nach einer Verbesserung einfach konfiguriert werden. So können mit der Verbesserung neue mögliche Aktionen der Arbeitsgeräte einhergehen. Nützlich ist in diesem Fall, wenn der Benutzer die erste beziehungsweise zweite erlaubte Aktion, die eine der neuen Aktionen sein kann, mit dem System selbst festlegen kann. Dies ist im Vergleich zu einer Variante, bei welcher beim Implementieren der neuen Aktionen geprüft werden muss, in welchen Bereichen die neuen Aktionen durchgeführt werden dürfen, einfacher und flexibler.

Gemäß einer weiteren Ausgestaltung ist mithilfe der Eingabeschnittstelle zu dem ersten Bereich eine erste Einschränkung einer Nutzung des ersten Bereiches mit dem Arbeitsgerät und/oder zu dem zweiten Bereich eine zweite Einschränkung einer Nutzung des zweiten Bereiches mit dem Arbeitsgerät bestimmbar. Ein Bestimmen der ersten beziehungsweise zweiten Einschränkung hat den Vorteil, dass das System mithilfe einer Änderung einer Software zum Steuern des Arbeitsgerätes verändert werden kann, ohne dass der Benutzer das System unmittelbar an die Änderung anpassen muss, sofern er zuvor die entsprechenden Einschränkungen bestimmt hat. So ist es möglich, dass die Änderung eine neue für den Benutzer bisher unbekannte Aktion des Arbeitsgerätes vorsieht, die das Arbeitsgerät in dem ersten und zweiten Bereich ausführen kann. Die neue Aktion kann in dem System ohne einem Wissen des Benutzers implementiert werden. Die Auswertungseinheit prüft bevorzugt, ob die neue Aktion im Rahmen der ersten beziehungsweise zweiten Einschränkung liegt und gibt vorteilhaft für diesen Fall die neue Aktion für den ersten beziehungsweise zweiten Bereich für das Arbeitsgerät frei.

Eine bevorzugte Ausführungsform sieht vor, dass mithilfe der Eingabeschnittstelle Grenzen eines dritten vom ersten und zweiten Bereich verschiedenen geografischen Bereiches bestimmbar sind und das System für die Nutzung des zweiten Bereiches mit dem Arbeitsgerät mehr Einschränkungen als für die Nutzung des ersten Bereiches mit dem Arbeitsgerät und für die Nutzung des dritten Bereiches mit dem Arbeitsgerät mehr Einschränkungen als für die Nutzung des zweiten Bereiches mit dem Arbeitsgerät aufweist.

Beispielsweise kann durch das System vorgegeben sein, dass in dem ersten Bereich das Arbeitsgerät dauerhaft abgestellt werden darf, d.h. in diesem Bereich auch bewegt werden darf, dass in dem zweiten Bereich das Arbeitsgerät bewegt aber nicht abgestellt werden darf und dass in dem dritten Bereich das Arbeitsgerät nicht abgestellt und nicht bewegt werden darf. Das System weist in diesem Beispiel keine Einschränkung für die Nutzung des Arbeitsgerätes in dem ersten Bereich, eine Einschränkung für die Nutzung des Arbeitsgerätes in dem zweiten Bereich, nämlich, dass das Arbeitsgerät dort nicht abgestellt werden darf, und zwei Einschränkungen für die Nutzung des Arbeitsgerätes in dem dritten Bereich, nämlich, dass das Arbeitsgeräte dort nicht bewegt und nicht abgestellt werden darf, auf.

Eine steigende Anzahl von Einschränkungen der einzelnen Bereiche hat den Vorteil, dass eine Bewertung der aktuellen Position, d.h. wie kritisch die aktuelle Position des Arbeitsgerätes ist, einfacher durchzuführen ist. Dies liegt daran, dass die Standortinformation des Arbeitsgerätes nur eine begrenzte Genauigkeit hat. Befindet sich das Arbeitsgerät nah an einer Grenze zwischen zwei Bereichen, beispielsweise zwischen dem zweiten und dritten Bereich gemäß des letztgenannten Beispiels, so ist es unter Umständen erforderlich, anhand der Standortinformation die Bewertung abzuschätzen. So kann ein Algorithmus zur Bewertung der aktuellen Position unter Berücksichtigung einer Ungenauigkeit der Standortinformation eine erste Wahrscheinlichkeit, von beispielsweise sechzig Prozent, ausgeben, dass das Arbeitsgerät in dem dritten Bereich liegt, und eine zweite Wahrscheinlichkeit, von beispielsweise vierzig Prozent, ausgeben, dass das Arbeitsgerät in dem zweiten Bereich liegt.

Um die Bewertung abschließend zu berechnen, kann die erste Wahrscheinlichkeit mit einem ersten Wert, beispielsweise zwei, und die zweite Wahrscheinlichkeit mit einem zweiten Wert, von beispielsweise eins, multipliziert werden, die jeweiligen Ergebnisse halbiert und aufsummiert werden. Ein derartiger Algorithmus zur Bewertung der aktuellen Position funktioniert besonders gut, wenn das System für den dritten Bereich zumindest dieselbe Einschränkung wie für den zweiten Bereich vorsieht. In diesem Fall ist es offensichtlich kritischer, wenn sich die aktuelle Position des Arbeitsgerätes in dem dritten Bereich befindet, als wenn sie sich in dem zweiten Bereich befindet. Bevorzugt ist die aktuelle Position des Arbeitsgerätes, sofern sich das Arbeitsgeräte im ersten, im zweiten beziehungsweise im dritten Bereich befindet, entsprechend zunehmend kritischer. Der erste Wert ist vorzugsweise höher als der zweite Wert, wenn die Anzahl der Einschränkungen für den dritten Bereich höher als die für den zweiten Bereich ist.

Die oben beschriebene Variante des Systems, die die Einschränkungen der drei Bereiche vorsieht, ermöglicht es, für den Benutzer eine Bewertung der aktuellen Position bereitzustellen, auch wenn das Arbeitsgerät aufgrund der Ungenauigkeit der Standortinformation nicht mit einhundert prozentiger Wahrscheinlichkeit in einem der Bereiche lokalisierbar ist. Ebenfalls kann vorteilhaft vorgesehen sein, dass der zweite Bereich zwischen dem ersten und dem dritten Bereich angeordnet ist.

Der Algorithmus zur Berechnung der Bewertung der aktuellen Position kann nach einem Gradientenverfahren und/oder einem Verfahren der Fuzzy-Logik funktionieren und wird vorzugsweise von der Auswertungseinheit ausgeführt.

In einer speziellen Ausführungsform weist das Arbeitsgerät einen GPS-Sensor auf, wobei die Standortinformation in Form von GPS-Daten ausgebildet ist. In diesem Fall kann die Standortinformation eine Ungenauigkeit von etwa ein bis fünf Metern haben.

Bevorzugt ist vorgesehen, dass das System eine Anzeige hat, auf welcher die aktuelle Position des Arbeitsgerätes anzeigbar ist. Des Weiteren ist es möglich, dass die Anzeige das Warnsignal und/oder die Bewertung der aktuellen Position für den Benutzer anzeigt. Die aktuelle Position und/oder der mit der Auswertungseinheit bestimmte erste, zweite oder dritte Bereich, in dem sich das Arbeitsgerät befindet, sind vorteilhaft mit der Anzeige auf einer Karte darstellbar. Dabei können die mit der Anzeige darstellbaren Informationen in Form von Push-Nachrichten angezeigt werden.

In einer Weiterbildung des System umfasst das System ein weiteres Arbeitsgerät mit einem weiteren Sender, wobei der weitere Sender eine weitere Standortinformation des weiteren Arbeitsgerätes an einen Empfänger des Arbeitsgerätes sendet und der Sender des Arbeitsgerätes die weitere Standortinformation an den Empfänger sendet. Der weitere Sender kann bei dieser Weiterbildung eine geringere Reichweite als der Sender haben, wodurch Kosteneinsparungen erzielt werden können. Der weitere Sender kann beispielsweise als ein Bluetooth-Sender ausgebildet sein. Diese Weiterbildung nutzt die Tatsache aus, dass unter der Annahme, dass sich mehrere Arbeitsgeräte in dem ersten, zweiten und/oder dritten Bereich befinden, diese häufig so nah zu einander angeordnet sind, dass sie auch mit der geringeren Reichweite kommunizieren können.

Zur Lösung der Aufgabe wird weiterhin ein Verfahren zur Überwachung eines mobilen Arbeitsgerätes mit einem System, das zumindest das mobile Arbeitsgerät mit einem Sender zum Senden einer Standortinformation des Arbeitsgerätes, einen Empfänger zum Empfangen der Standortinformation und eine Auswertungseinheit, die anhand der Standortinformation eine aktuelle Position des Arbeitsgerätes bestimmt, und eine Eingabeschnittstelle für einen Benutzer aufweist, vorgeschlagen. Das Verfahren hat die folgenden Schritte. In einem ersten Schritt werden Grenzen eines ersten geografischen Bereiches und Grenzen eines zweiten vom ersten verschiedenen geografischen Bereiches mithilfe der Eingabeschnittstelle für einen Benutzer bestimmt. In einem zweiten Schritt wird eine Aktion zu zumindest einem der beiden Bereiche, dem ersten und/oder dem zweiten Bereich, mithilfe der Eingabeschnittstelle zugewiesen, wobei das System die Aktion ausführt, wenn die aktuelle Position in dem ersten Bereich beziehungsweise in dem zweiten Bereich liegt. Das System kann vorteilhaft nach einer der oben beschriebenen Varianten ausgebildet sein.

Das von dem System ausgeführte vorgeschlagene Verfahren kann mittels eines Computerprogrammproduktes mit Programmcodemitteln zur Durchführung des Verfahrens durchgeführt werden, wenn das Computerprogrammprodukt auf der Auswertungseinheit des Systems abläuft. Zur Lösung der Aufgabe wird weiterhin ein Datenträger vorgeschlagen, auf dem das Computerprogrammprodukt abgespeichert ist.

Weitere Vorteile, Merkmale und Einzelheiten der Erfindung ergeben sich aus der nachfolgenden Beschreibung sowie anhand der Figuren. Dabei bezeichnet ein mehrfach verwendetes Bezugszeichen dieselbe Komponente. Die Figuren zeigen in:
- Figur 1: ein System zur Überwachung eines mobilen Arbeitsgerätes,
- Figur 2: Schritte eines Verfahrens zur Überwachung eines Arbeitsgerätes mit dem System nach Figur 1.

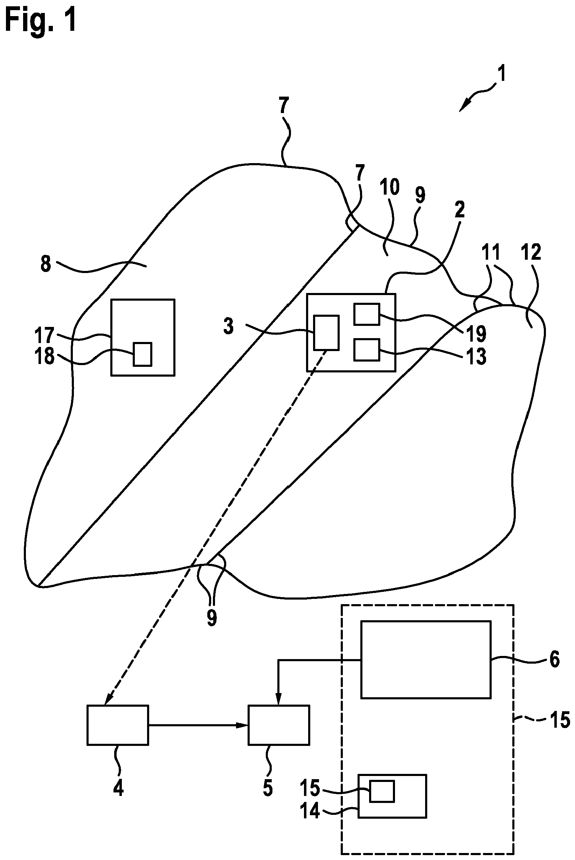

Fig. 1 zeigt ein System 1 zur Überwachung eines mobilen Arbeitsgerätes 2. Das System 1 weist zumindest das mobile Arbeitsgerät 2 mit einem Sender 3 zum Senden einer Standortinformation des Arbeitsgerätes 2, einen Empfänger 4 zum Empfangen der Standortinformation und eine Auswertungseinheit 5 auf. Die Auswertungseinheit 5 bestimmt anhand der Standortinformation eine aktuelle Position des Arbeitsgerätes 2. Das System 1 hat weiterhin eine Eingabeschnittstelle 6 für einen Benutzer des Systems 1. Mit Hilfe der Eingabeschnittstelle 6 sind Grenzen 7 eines ersten geographischen Bereiches 8 und Grenzen 9 eines zweiten vom ersten verschiedenen geographischen Bereiches 10 bestimmbar. Zusätzlich ist mit Hilfe der Eingabeschnittstelle zumindest eine Aktion zu zumindest einem der beiden Bereiche 8, 10, dem ersten Bereich 8 und/oder dem zweiten Bereich 10, zuweisbar. Das System 1 führt die Aktion aus, wenn die aktuelle Position in dem ersten Bereich 8 bzw. in dem zweiten Bereich 10 liegt.

Das Arbeitsgerät 2 kann beispielsweise eine Rüttelplatte sein, die mit einer Technologie zum Lokalisieren der Rüttelplatte, beispielsweise einem GPS-Sensor 13, ausgestattet ist. Das System 1 hat vorteilhaft eine Anzeige 14, auf welcher die aktuelle Position des Arbeitsgerätes 2 anzeigbar ist. Insbesondere ist die aktuelle Position mit der Anzeige 14 auf einer Karte 16 darstellbar.

Mit Hilfe der Eingabeschnittstelle 6 ist vorteilhaft zu dem ersten Bereich 8 eine erste Einschränkung einer Nutzung des ersten Bereiches 8 mit dem Arbeitsgerät 2 und zu dem zweiten Bereich 10 eine zweite Einschränkung einer Nutzung des zweiten Bereiches 10 mit dem Arbeitsgerät 2 bestimmbar. So kann beispielsweise die erste Einschränkung vorsehen, dass das Arbeitsgerät 2 in dem ersten Bereich 8 nicht geparkt werden darf, und die zweite Einschränkung vorsehen, dass das Arbeitsgerät 2 in dem zweiten Bereich 10 nur transportiert werden darf.

Eine weitere Variante kann vorsehen, dass mit Hilfe der Eingabeschnittstelle 6 Grenzen 11 eines dritten vom ersten Bereich 8 und vom zweiten Bereich 10 verschiedenen geographischen Bereiches 12 bestimmbar sind. Des Weiteren ist vorteilhaft vorgesehen, dass das System 1 für die Nutzung des zweiten Bereiches 10 mit dem Arbeitsgerät 2 mehr Einschränkungen als für die Nutzung des ersten Bereiches mit dem Arbeitsgerät 2 und für die Nutzung des dritten Bereiches 12 mit dem Arbeitsgerät 2 mehr Einschränkungen als für die Nutzung des zweiten Bereiches 10 mit dem Arbeitsgerät 2 aufweist.

Beispielsweise kann vorgesehen sein, dass das System 1 für die Nutzung des ersten Bereiches 8 mit dem Arbeitsgerät 2 keine Einschränkungen vorsieht und für die Nutzung des zweiten Bereiches 10 mit dem Arbeitsgerät 2 vorsieht, dass das Arbeitsgerät 2 nicht dauerhaft abgestellt werden darf. Für den dritten Bereich 12 kann als Einschränkung vorgesehen sein, dass das Arbeitsgerät dort nicht hinbewegt werden darf. Beispielsweise kann der dritte Bereich 12 ein Rettungsweg, der zweite Bereich 10 ein Fahrweg und der erste Bereich 8 ein Lagerplatz sein. Anhand einer Darstellung der aktuellen Position des Arbeitsgerätes 2 mit der Anzeige 14 auf der Karte 16 kann die aktuelle Position jederzeit nachverfolgt werden. Auch ist es möglich, dass ein Benutzer die Grenzen 7, 9 und/oder 11 des ersten Bereiches 8, des zweiten Bereiches 10 bzw. des dritten Bereiches 12 neu bestimmt. Vorzugsweise ermittelt die Auswertungseinheit 5, ob das Arbeitsgerät 2 in oder aus den ersten Bereich 8, den zweiten Bereich 10 oder den dritten Bereich 12 eintritt beziehungsweise austritt, und erzeugt entsprechend ein Signal, welches von der Auswertungseinheit 5 an die Anzeige 14 gesendet und mittels der Anzeige 14 dem Benutzer angezeigt wird. Sowohl die Anzeige 14 als auch die Eingabeschnittstelle 6 können vorteilhaft in einem mobilen Gerät 15, wie einem Smartphone, angeordnet sein. Die von der Auswertungseinheit 5 an die Anzeige 14 gesendeten Signale können bevorzugt in Form von Push-Nachrichten angezeigt werden.

Vorteilhaft zeigt die Anzeige 14 den ersten Bereich 8 grün, den zweiten Bereich 10 gelb und den dritten Bereich 12 rot an. Bevorzugt kann der Benutzer mit Hilfe der Eingabeschnittstelle 6 eine Farbe des ersten, zweiten und/oder dritten Bereiches 8, 10, 12 auswählen.

Das System 1 kann weiterhin ein weiteres Arbeitsgerät 17 mit einem weiteren Sender 18 umfassen, wobei der weitere Sender 18 eine weitere Standortinformation des weiteren Arbeitsgerätes 17 an einen Empfänger 19 des Arbeitsgerätes 2 sendet. Der Sender 3 des Arbeitsgerätes 2 sendet die weitere Standortinformation an den Empfänger 4, wobei der Empfänger 19 mit dem Sender 3 verbunden ist und die weitere Standortinformation von dem Empfänger 19 erhält.

Vorteilhaft kann mit Hilfe der Eingabeschnittstelle 6 zu dem ersten Bereich 8 eine in dem ersten Bereich 8 erste erlaubte Aktion und/oder zu dem zweiten Bereich 10 eine in dem zweiten Bereich 10 zweite erlaubte Aktion zugewiesen werden. Die erste erlaubte Aktion darf mit dem Arbeitsgerät 2 in dem ersten Bereich 8 und die zweite erlaubte Aktion mit dem Arbeitsgerät 2 in dem zweiten Bereich 10 durchgeführt werden.

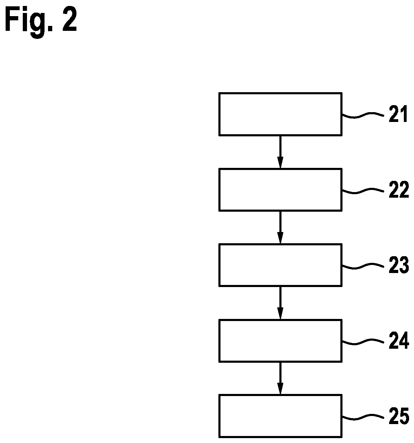

Fig. 2 zeigt Schritte eines Verfahrens zur Überwachung des Arbeitsgerätes 2. In einem ersten Schritt 21 wird mit Hilfe der Eingabeschnittstelle 6 eine Kategorie einer Grenze 7, 9, 11 gewählt. In einem zweiten Schritt 22 wird die Grenze 7 eines ersten Bereiches 8 gewählt. In einem zweiten Schritt wird eine Position der Grenze 7 bestimmt. In einem dritten Schritt 23 wird eine Aktion bestimmt, welche das System ausführt, wenn sich das Arbeitsgerät 2 in dem ersten Bereich 8 befindet. Dies kann beispielsweise ein Alarm, eine Benachrichtigung oder ein Hinweis sein. In einem vierten Schritt 24 wird mit Hilfe des Systems 1 und des Senders 3 das Arbeitsgerät 2 in dem ersten Bereich 8 erfasst. In einem fünften Schritt 25 wird die für den ersten Bereich 8 festgelegte Aktion durch die Auswertungseinheit 5 ausgelöst.

## Patentansprüche

1. System (1) zur Überwachung eines mobilen Arbeitsgerätes (2), wobei das System (1) zumindest das mobile Arbeitsgerät (2) mit einem Sender (3) zum Senden einer Standortinformation des Arbeitsgerätes (2), einen Empfänger (4) zum Empfangen der Standortinformation und eine Auswertungseinheit (5) aufweist, die anhand der Standortinformation eine aktuelle Position des Arbeitsgerätes (2) bestimmt,
**dadurch gekennzeichnet, dass** das System (1) eine Eingabeschnittstelle (6) für einen Benutzer des Systems (1) hat und mithilfe der Eingabeschnittstelle (6) Grenzen (7) eines ersten geografischen Bereiches (8) und Grenzen (9) eines zweiten vom ersten verschiedenen geografischen Bereiches (10) bestimmbar sind und zu zumindest einem der beiden Bereiche (8, 10), dem ersten Bereich (8) und/oder dem zweiten Bereich (10), mithilfe der Eingabeschnittstelle (6) zumindest eine Aktion zuweisbar ist, die das System (1) ausführt, wenn die aktuelle Position in dem ersten Bereich (8) beziehungsweise in dem zweiten Bereich (10) liegt.

2. System (1) nach Anspruch 1,
**dadurch gekennzeichnet, dass** mithilfe der Eingabeschnittstelle (6) zu dem ersten Bereich (8) eine in dem ersten Bereich (8) erste erlaubte Aktion und/oder zu dem zweiten Bereich (10) eine in dem zweiten Bereich (10) zweite erlaubte Aktion zuweisbar ist, wobei die erste erlaubte Aktion mit dem Arbeitsgerät (2) in dem ersten Bereich (8) und die zweite erlaubte Aktion mit dem Arbeitsgerät (2) in dem zweiten Bereich (10) durchgeführt werden darf.

3. System (1) nach Anspruch 1 oder 2,
**dadurch gekennzeichnet, dass** mithilfe der Eingabeschnittstelle (6) zu dem ersten Bereich (8) eine erste Einschränkung einer Nutzung des ersten Bereiches (8) mit dem Arbeitsgerät (2) und/oder zu dem zweiten Bereich (10) eine zweite Einschränkung einer Nutzung des zweiten Bereiches (10) mit dem Arbeitsgerät (2) bestimmbar ist.

4. System (1) nach Anspruch 3,
**dadurch gekennzeichnet, dass** mithilfe der Eingabeschnittstelle (6) Grenzen (11) eines dritten vom ersten und zweiten Bereich (8, 10) verschiedenen geografischen Bereiches (12) bestimmbar sind und das System (1) für die Nutzung des zweiten Bereiches (10) mit dem Arbeitsgerät (2) mehr Einschränkungen als für die Nutzung des ersten Bereiches (8) mit dem Arbeitsgerät (2) und für die Nutzung des dritten Bereiches (12) mit dem Arbeitsgerät (2) mehr Einschränkungen als für die Nutzung des zweiten Bereiches (10) mit dem Arbeitsgerät (2) aufweist.

5. System (1) nach einem der vorhergehenden Ansprüche,
**dadurch gekennzeichnet, dass** das Arbeitsgerät (2) einen GPS-Sensor (13) aufweist und die Standortinformation GPS-Daten sind.

6. System (1) nach einem der vorhergehenden Ansprüche,
**dadurch gekennzeichnet, dass** das System (1) eine Anzeige (14) hat, auf welcher die aktuelle Position des Arbeitsgerätes (2) anzeigbar ist.

7. System (1) nach einem der vorhergehenden Ansprüche,
**dadurch gekennzeichnet, dass** die Eingabeschnittstelle (6) als ein mobiles Gerät (15) ausgeführt ist.

8. System (1) nach einem der vorhergehenden Ansprüche,
**dadurch gekennzeichnet, dass** die aktuelle Position mit der Anzeige (14) auf einer Karte (16) darstellbar ist.

9. System (1) nach einem der vorhergehenden Ansprüche,
**dadurch gekennzeichnet, dass** das System (1) ein weiteres Arbeitsgerät (17) mit einem weiteren Sender (18) umfasst und der weitere Sender (18) eine weitere Standortinformation des weiteren Arbeitsgerätes (17) an einen Empfänger (19) des Arbeitsgerätes (2) sendet und der Sender (3) des Arbeitsgerätes (2) die weitere Standortinformation an den Empfänger (4) sendet.

10. Verfahren zur Überwachung eines mobilen Arbeitsgerätes (2) mit einem System (1), das zumindest das mobile Arbeitsgerät (2) mit einem Sender (3) zum Senden einer Standortinformation des Arbeitsgerätes (2), einen Empfänger (4) zum Empfangen der Standortinformation und eine Auswertungseinheit (5), die anhand der Standortinformation eine aktuelle Position des Arbeitsgerätes (2) bestimmt, und eine Eingabeschnittstelle (6) für einen Benutzer aufweist, mit den folgenden Schritten:
- Bestimmen von Grenzen (7) eines ersten geografischen Bereiches (8) und Grenzen (9) eines zweiten vom ersten verschiedenen geografischen Bereiches (10) mithilfe der Eingabeschnittstelle (6) für einen Benutzer,
- Zuweisen einer Aktion zu zumindest einem der beiden Bereiche (8, 10), dem ersten und/oder dem zweiten Bereich (8, 10), mithilfe der Eingabeschnittstelle (6), wobei das System (1) die Aktion ausführt, wenn die aktuelle Position in dem ersten Bereich (8) beziehungsweise in dem zweiten Bereich (10) liegt.

11. Computerprogrammprodukt mit Programmcodemitteln zur Durchführung des Verfahrens nach Anspruch 10, wenn das Computerprogrammprodukt auf einer Auswertungseinheit (5) eines Systems (1) nach einem der Ansprüche 1 bis 9 abläuft.

12. Datenträger, auf dem das Computerprogrammprodukt nach Anspruch 11 abgespeichert ist.
